# EUROPEAN PATENT APPLICATION

(11) **EP 1 729 074 A2**
(43) Date of publication of application: **06.12.2006**
(21) Application number: 06011007.9
(22) Date of filing: 29.05.2006
(51) Int. Cl.: F25B 1/10, F25B 9/00, F25B 40/00, F25D 11/02, F25D 23/00, F25D 17/04, F25D 17/06

(54) **Refrigerator**

(30) Priority: 31.05.2005 JP 2005159159
(71) Applicant: SANYO ELECTRIC CO., LTD., Moriguchi-shi, Osaka (JP)
(72) Inventor: Itsuki, Hiroyuki, Ora-gun Gunma370-0533 (JP); Mukaiyama, Hiroshi, Ora-gun Gunma 370-0725 (JP); Imai, Satoshi, Ota-shi Gunma 373-0038 (JP)
(74) Representative: Glawe, Delfs, Moll

(57) **Abstract**

It is an object of the present invention to provide a refrigerator which is able to improve the efficiency of the refrigerating cycle while avoiding causing the structure of the refrigerator to be complicated, and avoiding a cost increase. Refrigerator 30 includes a refrigerating cycle device 20 having a compressor 1, a radiator 2 connected to a discharge side of the compressor 1, a first expansion valve 31 connected to an exit side of the radiator 2, a gas-liquid separator 33 for separating a refrigerant, which is in a mixed gas-liquid state by being decompressed by the first expansion valve 31, into a gas refrigerant and a liquid refrigerant, a heat absorber 14 into which the liquid refrigerant discharged from the gas-liquid separator 33 flows, and a refrigerant pipe 6D for delivering the gas refrigerant discharged from the gas-liquid separator 33 into the middle pressure portion of the compressor 1; an outer case 40; an inner case 39; and a heat insulating material. The gas-liquid separator 33 is arranged in the heat insulating material 47.

## Description

### BACKGROUND OF THE INVENTION

### Field of the Invention

This invention relates to a refrigerator, and in particular, it relates to an improvement of cooling capacity and efficiency in a refrigerator.

### Description of the Related Art

In recent years, due to problems such as global warming, there has been a growing demand for the reduction of environmental burdens, and the like, and because of this, a large number of techniques have been proposed for the purpose of reducing electric power consumption and improvement of efficiency in cooling operation for a refrigerator.

For example, Japanese Unexamined Patent Publication No. H11-148761 discloses a technique for improving the efficiency of an operation in a refrigerator by cooling a refrigerating compartment and a freezing compartment alternately and repeatedly to reduce the compression ratio of a compressor.

Furthermore, for the purpose of providing an energysaving freezing refrigerator by improving efficiency of the refrigerating cycle while cooling a freezing compatment, Japanese Unexamined Patent Publication No. 2004-32492 discloses a technique for improving efficiency of the refrigerating cycle by lowering the condensation temperature of the refrigerating cycle by means of a condenser in the refrigerating compartment, and by conducting a freezing cycle operation for the freezing compartment with a low compression ratio.

However, in the aforementioned conventional structure, there is a limit on further improving the efficiency of the refrigerating cycle, and also there is a possibility of causing an increase in cost due to the complicated structure and control of the refrigerator.

### SUMMARY OF THE INVENTION

Therefore, it is an object of the present invention to provide a refrigerator which is able to improve the efficiency of the refrigerating cycle while avoiding causing the structure of the refrigerator to be complicated, and avoiding a cost increase.

In a first aspect of the present invention, there is provided a refrigerator comprising a refrigerating cycle device including a compressor having a middle pressure portion, a radiator connected to a discharge side of the compressor, first decompression means connected to an exit side of the radiator, gas-liquid separation means for separating a refrigerant, which is in a mixed gas-liquid state by being decompressed by the first decompression means, into a gas refrigerant and a liquid refrigerant, second decompression means into which the liquid refrigerant discharged from the gas-liquid separation means flows, a heat absorber into which the refrigerant discharged from the second decompression means flows, and a refrigerant pipe for delivering the gas refrigerant discharged from the gas-liquid separation means to the middle pressure portion; an outer case; an inner case; and a heat insulating material for filling a gap between the outer case and the inner case; wherein; the gas-liquid separation means is arranged in the heat insulating material.

According to the aforementioned structure, the refrigerator provided with the gas-liquid separation means has no need to provide a special heat insulating material for the gas-liquid separator except providing a heat insulating material for the main body of the refrigerator, and thereby low cost is achieved, and also dew condensation and a temperature rise can be avoided.

In a second aspect of the present invention, there is provided a refrigerator comprising a refrigerating cycle device, including a compressor having a middle pressure portion, a radiator connected to a discharge side of the compressor, first decompression means connected to an exit side of the radiator, gas-liquid separation means for separating a refrigerant, which is in a mixed gas-liquid state by being decompressed by the first decompression means, into a gas refrigerant and a liquid refrigerant, second decompression means into which the liquid refrigerant discharged from the gas-liquid separation means flows, a heat absorber into which the refrigerant discharged from the second decompression means flows, and a refrigerant pipe for delivering the gas refrigerant discharged from the gas-liquid separation means to the middle pressure portion; an outer case; an inner case; and a storage box filled with heat insulating material; wherein the gas-liquid separation means is housed in the storage box.

According to the aforementioned structure, the refrigerator provided with the gas-liquid separation means has no need of providing a special heat insulating material for the gas-liquid separator except providing a heat insulating material for the main body of the refrigerator, and thereby low cost is achieved, and additionally dew condensation and a temperature rise can be avoided. Also, maintainability of welded portions of the gas-liquid separation means, and the like, can be improved.

In a third aspect of the present invention, in the refrigerator of the first or the second aspect, the refrigerator includes a refrigerating compartment, and a freezing compartment in which a temperature is maintained lower than a temperature of the refrigerating compartment, and the gas-liquid separation means is placed closer to the refrigerating compartment than to the freezing compartment.

According to the aforementioned structure, the refrigerator provided with the gas-liquid separation means avoids heat leakage from the gas-liquid separation means to the freezing compartment.

In a fourth aspect of the present invention, the refrigerator of any one of first aspect to the third aspect includes a heat exchanger arranged to be capable of conducting heat exchange between the refrigerant which is between the discharge side of the compressor and the first decompression means, and the refrigerant which is between an exit side of the heat absorber and a suction port of the compressor.

In a fifth aspect of the present invention, the refrigerator of any one of first aspect to the fourth aspect includes a first heat exchanger arranged to be capable of conducting heat exchange between the liquid refrigerant which is separated by the gas-liquid separation means before entering the second decompression means, and the refrigerant which is in between the exit side of the heat absorber and the suction port of the compressor, and / or a second heat exchanger arranged to be capable of conducting heat exchange between the refrigerant which is between the discharge side of the compressor and the first decompression means, and the gas refrigerant which is separated by the gas-liquid separation means before being delivered into the middle pressure portion of the compressor.

According to the aforementioned structure, it is possible to supercool the refrigerant before entering the heat absorber, and thereby the cooling ability of the refrigerator is improved.

In a sixth aspect of the present invention, there is provided a refrigerator comprising a refrigerating cycle device which includes a compressor, a radiator connected to a discharge side of the compressor, decompression means connected to an exit side of the radiator, and a heat absorber into which a liquid refrigerant discharged from the decompression means flows, and which is filled with a carbon dioxide refrigerant; an outer case; an inner case; and heat insulating material for filling a gap between the outer case and the inner case; wherein a high pressure refrigerant pipe extending from the radiator is embedded in the heat insulating material.

According to the aforementioned structure, in the case where the refrigerator uses carbon dioxide as a refrigerant, the high pressure side is operated near the supercritical pressure, and therefore, when the high pressure refrigerant pipe is cooled in the heat insulating material, it is possible to obtain higher supercooling effect than the case in which a CFC-type refrigerant or hydrocarbon refrigerant is used, and thus the cooling ability of the refrigerator can be improved. Furthermore, since the high pressure side of the refrigerating cycle is cooled, the high pressure of the refrigerating cycle can be decreased and the compression efficiency of the compressor can be improved.

In a seventh aspect of the present invention, in the refrigerator of the sixth aspect, a second heat insulating material which has lower thermal conductivity than the heat insulating material is provided in the heat insulating material arranged in a back of the refrigerator; and the high pressure refrigerant pipe is placed outside a side edge of the second heat insulating material.

According to the aforementioned structure, it is possible to effectively cool the high pressure refrigerant pipe of the refrigerating cycle by using cold energy leaking outside by surrounding the second heat insulating material which has lower thermal conductivity, such as vacuum heat insulating material.

The present invention provides a refrigerator capable of improving the efficiency of a refrigerating cycle while avoiding causing the structure of refrigerator to be complicated, and avoiding a cost increase.

### BRIEF DESCRIPTION OF THE DRAWINGS

Figs. 1A to 1C are views showing an outline structure of a preferred embodiment of a refrigerator according the present invention;
Fig. 2 is a view showing an enthalpy-pressure chart of a refrigerating cycle during a freezing operation of the embodiment of the refrigerator according the present invention;
Fig. 3 is a view showing an enthalpy-pressure chart of a refrigerating cycle during a refrigerating operation of the embodiment of the refrigerator according the present invention;
Fig. 4 is a view showing an outline structure of a refrigerator according to a second embodiment of the present invention;
Fig. 5 is a view showing an outline structure of a refrigerator according to a third embodiment of the present invention; and
Fig. 6 is a view showing an outline structure of a refrigerator according to a forth embodiment of the present invention.

### DESCRIPTION OF THE PREFERRED EMBODIMENTS

Preferred embodiments of the refrigerator of the present invention will be explained hereinbelow with reference to the accompanying drawings.

### <First embodiment>

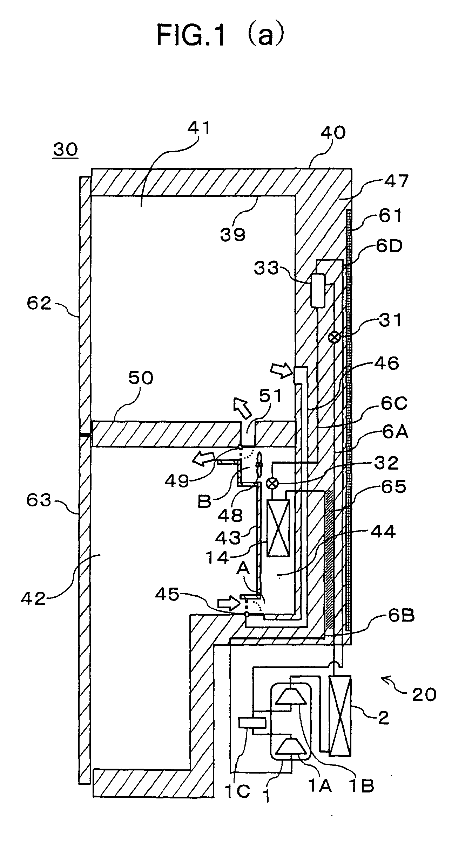

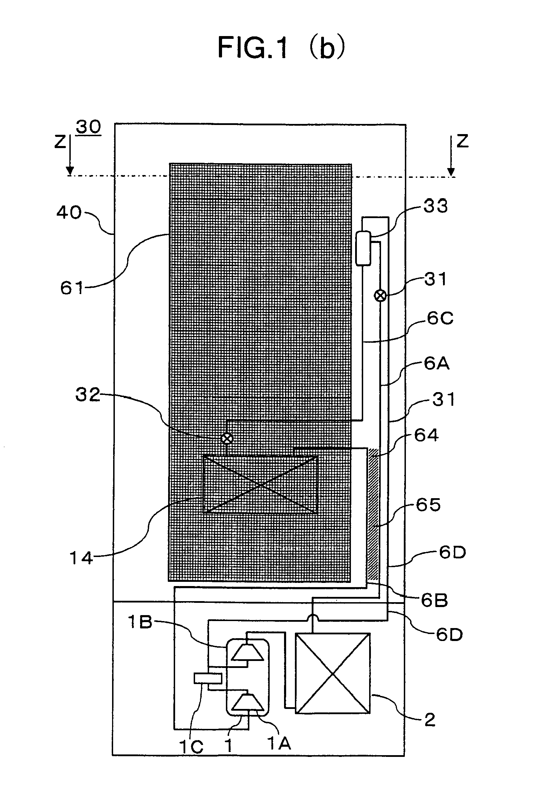

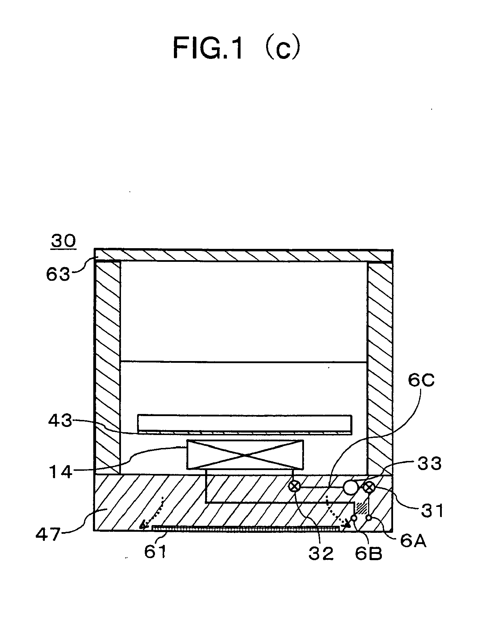

An embodiment of the present invention is described in detail with reference to the accompanying drawings. Figs. 1A to 1C are views illustrating an outline structure of a refrigerator 30 according to the present embodiment, wherein Fig. 1A is a side sectional view of the refrigerator 30 according to the present invention, Fig. 1B is a rear elevation of the refrigerator 30, and Fig. 1C is a sectional view, taken along the line Z-Z in Fig. 1B.

As shown in Fig. 1A, the refrigerator 30 includes a refrigerating cycle unit 20, an outer case 40, an inner case 39, doors 62 and 63, and a middle partition wall 50. A refrigerating compartment 41 and a freezing compartment 42 are formed by partitioning the inner case 39 by using the doors 62 and 63 and the middle partition wall 50.

The refrigerating cycle unit 20 includes a compressor 1; a radiator 2 connected to the discharge side of the compressor 1; a first expansion valve 31 as decompression means provided in a refrigerant pipe 6A on the exit side of the radiator 2; a gas-liquid separator 33 as gas-liquid separation means connected to the exit side of the first expansion valve 31; a second expansion valve 32 as decompression means provided in a refrigerant pipe 6C which is on the exit side of the gas-liquid separator 33 and from which a liquid refrigerant separated by the gas-liquid separator flows; a heat absorber 14 which is as a heat exchanger for cooling respective compartments 41 and 42 and which is connected to the exit side of the second expansion valve 32; and a first heat exchanger 65 capable of conducting heat exchange between the refrigerant from the radiator 2 and the refrigerant from the heat absorber 14. Also, the refrigerating cycle is formed by connecting a refrigerant pipe 6B on the exit side of the heat absorber 14 to the suction port of the compressor 1, and by connecting the upper portion of the gas-liquid separator 33 to a middle pressure portion of the compressor 1 via a refrigerant pipe 6D.

Incidentally, the gas refrigerant separated by the gas-liquid separator 33 is returned to the middle pressure portion of the compressor 1 through the refrigerant pipe 6D.

Furthermore, the first expansion valve 31 and the second expansion valve 32 are constructed so that the degree of throttling can be changed. It is possible to change the separation efficiency in the gas-liquid separator 33 by changing the degree of throttling in the first expansion valve 31 so that the pressure of the refrigerant is reduced to a predetermined pressure and the gas refrigerant is generated until the refrigerant reaches the gas-liquid separator 33, and thus the refrigerant flows into the gas-liquid separator 33 in a mixed gas-liquid state (a two-phase mixture of gas/liquid). On the other hand, it is possible to control the evaporation temperature of the refrigerant in the heat absorber 14 by changing the degree of throttling in the second expansion valve 32 so that the pressure of the refrigerant is reduced to a predetermined level until the refrigerant reaches the heat absorber 14.

The compressor 1 is a two-stage compressor which includes a first stage compression portion 1A and a second stage compression portion 1B inside a sealed container. The compressor 1 also includes a middle cooler 1C, which is provided on a refrigerant pipe outside the sealed container, and which connects the first stage compression portion 1A and the second stage compression portion 1B. Furthermore, the refrigerant pipe 6D is connected to be able to deliver the gas refrigerant to the middle pressure portion of the compressor 1, that is, between the middle cooler 1C and the second stage compression portion 1B. Incidentally, the gas refrigerant from the gas-liquid separator 33 is delivered to the middle pressure portion of the compressor 1 due to a pressure difference inside the refrigerant pipe 6D. The compressor 1 is not limited to a two-stage compressor. For example, if a one-stage compressor is employed, the refrigerant pipe 6D may be connected to the middle pressure portion of the one-stage compressor. Also, even if a structure in which a plurality of compressors are connected is used, the refrigerant pipe 6D can be formed to be connected to a middle pressure portion between a compressor of a lower stage side and a compressor of a higher stage side.

In Fig. 1A, the path from the discharge side of the second stage compression portion 1B to the entrance of the first expansion valve 31 via the radiator 2 is operated as a high pressure portion of the refrigerating cycle. Also, the path from the discharge side of the first stage compression portion 1A to the suction port of the second stage compression portion 1B via the middle cooler 1C, the path from the exit of the first expansion valve 31 to the entrance of the second expansion valve 32 via the gas-liquid separator 33, and the path of the refrigerant pipe 6D are operated as middle pressure portion of the refrigerating cycle. Furthermore, the path from the exit of the second expansion valve 32 to the suction port of the first stage compression portion 1A via the heat absorber 14 is operated as a low pressure portion of the refrigerating cycle.

The gap formed between the outer case 40 and the inner case 39, and between the inner member and the outer member of the doors 62 and 63, and the like, is filled with a heat insulating material 47. Polyurethane foam is used as the heat insulating material 47, and the gap can be filled with the heat insulating material 47 by injecting concentrated solution of the polyurethane foam and by foaming the same.

Furthermore, in the refrigerator 30 of the present embodiment, as shown in Figs. 1A to 1C, a vacuum heat insulating material 61 is provided on the back of the refrigerator 30 between the heat insulating material 47 and the outer case 40, with a predetermined distance of, for example, 50 to 150 mm from the top, bottom, left, and right edge portion of the outer case 40. The vacuum heat insulating material 61 is constructed by housing a core material such as micronized powder of glass fiber, silica, pearlite, and the like, silica aerogel, or open-cell polyurethane foam inside an air non-permeable outer body, and by extracting air from the inside, and thus, for a single panel vacuum heat insulating material, the vacuum heat insulating material 61 provides excellent thermal insulating ability with a thermal conductivity of about 0.002 to 0.005 W/m·K. Incidentally, the thermal conductivity of the polyurethane form used as the heat insulating material 47 is about 0.022W/m·K.

In this instance, as shown in Figs. 1B and 1C, among the high pressure portions of the refrigerating cycle, the refrigerant pipe 6A extending from the radiator 2 is placed outside the side edge of the vacuum heat insulating material 61. This is to cool the refrigerant pipe 6A effectively by using cold energy which escapes from the compartments 41 nad 42 to the outside avoiding the vacuum heat insulating material 61, since the vacuum heat insulating material 61 has a very low thermal conductivity and high thermal insulating ability, and is placed in the heat insulating material 47 in the preferred embodiment of the present invention, so the cold energy from respective compartments 41 and 42 moves in the direction of dotted line arrows shown in Fig. 1C.

Furthermore, the refrigerator 30 has the refrigerating compartment 41 in the upper part and the freezing compartment 42 in the lower part, and additionally, an inner partition wall 43 is provided in the rear portion in the freezing compartment 42, and the heat absorber 14 is placed inside an air path 44 formed by the inner partition wall 43.

A first switching damper 45 is provided in the entrance A of the air path 44, the first switching damper 45 being constructed so that it can be switched between a closed position (the position of the dotted line) and an open position (the position of the solid line). Furthermore, a fan 48 and a second switching damper 49 are provided in the exit B of the air path 44, the second switch damper 49 being constructed so that it can be switched between a closed position (the position of the dotted line) and an open position (the position of the solid line). When the second switching damper 49 is in the position of the solid line, an open portion 51 of the middle partition wall 50 is closed by the second switching damper 49.

Furthermore, a back air path 46 is provided in the heat insulating material 47 on the back of the refrigerator 30. Thereby, when both the first switching damper 45 and the second switching damper 49 are switched to the positions of the dotted lines, the air path 44 and the refrigerating compartment 41 are in communication via the back air path 46. On the other hand, when both the first switching damper 45 and the second switching damper 49 are switched to the positions of the solid lines, the air flow through the back air path 46 is blocked, and the air path 44 and the freezing compartment 42 are in communication.

In the refrigerating cycle device 20 of the refrigerator 30 according to the present embodiment, taking account of combustibility, toxicity, and the like, carbon dioxide (CO2) refrigerant, which is a natural refrigerant and imposes less burdens on the environment, is used as the refrigerant. Additionally, mineral oil, alkyl benzene oil, etheral oil, PAG (polyalkylene glycol), POE (polyol ester), and the like, are used as oil for lubricant of the compressor 1.

Thus, as the refrigerator 30 uses carbon dioxide as a refrigerant, for example, if the outside air temperature becomes more than the critical temperature (about + 31°C) for carbon dioxide, the high pressure portion of the refrigerating cycle enters a supercritical condition, and thereby the refrigerating cycle of the refrigerator 30 is operated as a trans-critical cycle.

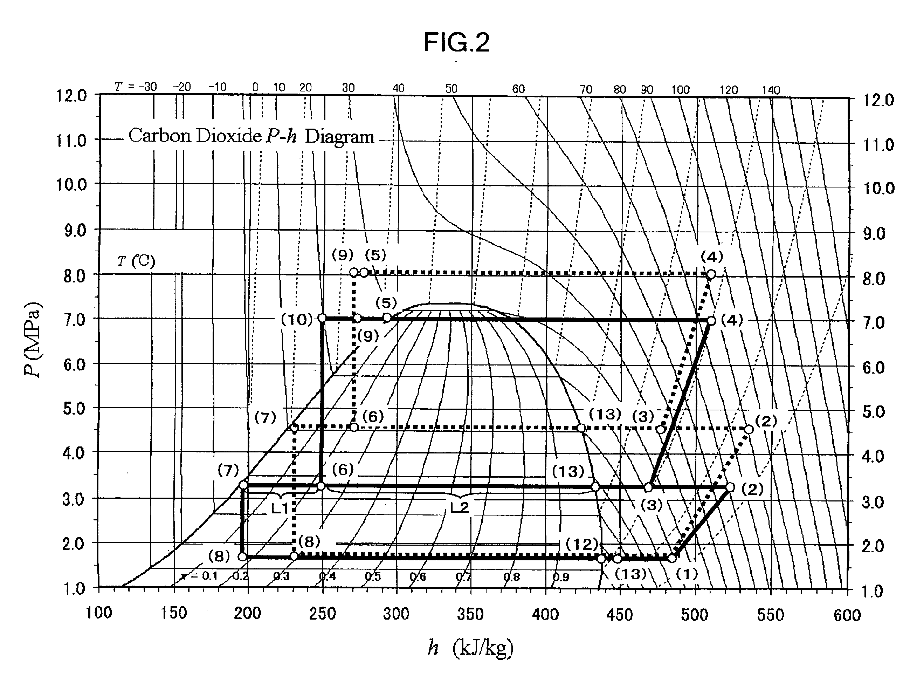

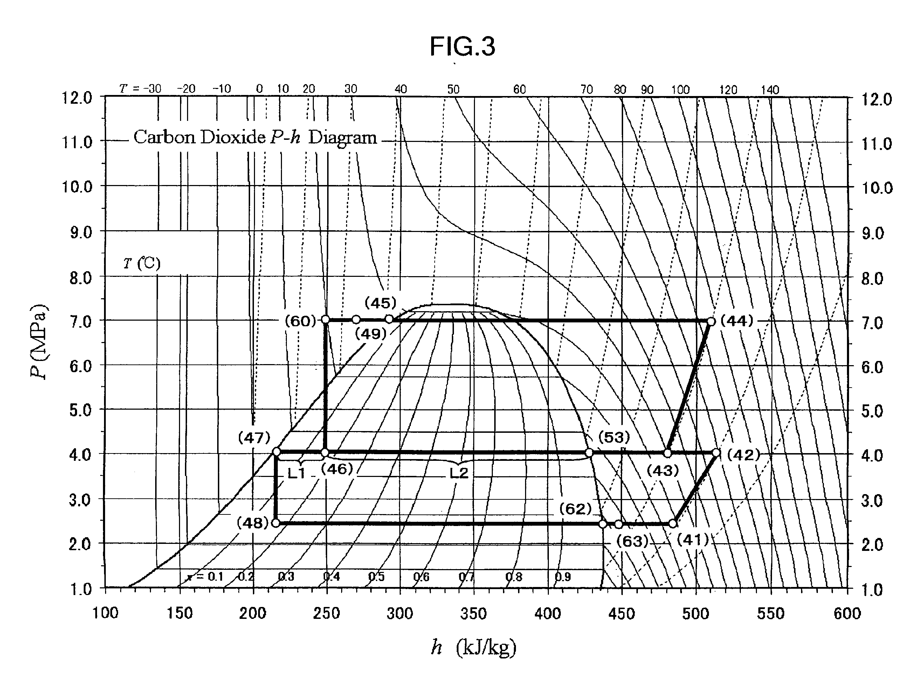

The operation of the refrigerator 30 having the aforementioned structure is explained with reference to Figs. 1A-1C and 2. Figure 2 is an enthalpy-pressure (p-h) chart of the refrigerating cycle during the freezing operation in the refrigerator 30 of the present embodiment and Fig. 3 is an enthalpy-pressure (p-h) chart of the refrigerating cycle during refrigerating operation in the refrigerator 30. In Figs. 2 and 3, the cycle line shown with the solid line is the cycle line of the refrigerator 30 of the present embodiment.

Incidentally, unlike the refrigerator 30 of the present embodiment, the cycle line shown with the dotted line in Fig. 2 is a cycle line of a comparative example of a refrigerator in which the refrigerant pipe 6A on the exit side of the radiator 2 is not embedded in the heat insulating material 47. The comparison is described in detail later.

The refrigerator 30 is selectively operated by the control device (not shown) between a freezing operation (for example, around -26°C) for cooling the freezing compartment 42, and a refrigerating operation (for example, around -5°C) for cooling the refrigerating compartment 41. In each operation, the first expansion valve 31 and the second expansion valve 32 are controlled by the control device (not shown) to have a predetermined degree of openness.

Furthermore, during the freezing operation, by placing the first switching damper 45 in the position for opening the entrance A of the air path 44 (the solid line), and the second switching damper 49 in the position for opening the exit B of the air path 44 (the solid line), the air inside the freezing compartment 42 is circulated and cooled by the heat absorber 14. Furthermore, during the refrigerating operation, by placing the first switching damper 45 in the position for closing the entrance A of the air path 44 (the dotted line), and the second switching damper 49 in the position for closing the exit B of the air path 44 (the dotted line), the air inside the refrigerating compartment 41 is circulated via the back air path 46 and cooled by the heat absorber 14.

First, the freezing operation is explained by using the cycle line shown with the solid line in Fig. 2. In the present embodiment, when the compressor 1 is operated, the refrigerant discharged from the compressor 1 is cooled by the radiator 2 to radiate the heat. That is, first, the refrigerant flows in the following order: (1) the suction port of the first stage compression portion 1A; (2) the discharge port of the first stage compression portion 1A; (3) the suction port of the second step compression portion 1B; and (4) the discharge port of the second stage compression portion 1B. Continuously, the refrigerant flows in the following order: (5) the exit of the radiator 2 and also the entrance of the first heat exchanger 65; (9) the exit of the first heat exchanger 65; (10) the entrance of the expansion valve 31; and (6) the exit of the first expansion valve 31. In this situation, the refrigerant is in the two-phase mixture of gas/liquid.

In this situation, the proportion of gas to liquid is equivalent of the proportion of the length of a line segment L1 (gas) to the length of a line segment L2 (liquid). The refrigerant enters the gas-liquid separator 33 in the state of the two-phase mixture of gas/liquid. The gas refrigerant, which has been separated in this point, is delivered to the middle pressure portion of the compressor 1 through the refrigerant pipe 6D, that is, led to a portion between the middle cooler 1C and the second stage compression portion 1B. Character (13) designates the exit of the gas/liquid separator 33 (gas refrigerant), and the refrigerant which has passed this point reaches the suction port of the second stage compression portion 1B (3), and then the refrigerant is compressed in the second stage compression portion 1B.

On the other hand, the liquid refrigerant, which has been separated by the gas-liquid separator 33, flows through the refrigerant pipe 6C, and reaches the second expansion valve 32. Character (7) designates the entrance of the second expansion valve 32, character (8) is the exit of the second expansion valve 32, and character (12) is the exit of the heat absorber 14. After the liquid refrigerant flown into the heat absorber 14 evaporates and absorbs the heat of the air inside the air path 44, and the liquid refrigerant conducts heat exchange with the refrigerant coming from the radiator 2 in the first heat exchanger 65, and returns to the suction portion of the first stage compression portion 1A. Character (13) is the exit of the first heat exchanger 65.

During the freezing operation, the refrigerating cycle is operated as described above, and also the first switching damper 45 is placed in the position for opening the entrance A of the air path 44 (the solid line) and the second switching damper 49 is placed in the position for opening the exit B of the air path 44 (the solid line), and therefore, the air inside the freezing compartment 42 is circulated by the fan 48, and thus the circulated air is cooled by the heat absorber 14, resulting in cooling the freezing compartment 42.

On the contrary, during the refrigerating operation, the cycle line shown with the olid lines in Fig. 3 is formed. During the refrigerating operation too, when the compressor 1 is operated, the refrigerant discharged from the compressor 1 is also cooled by the radiator 2 to radiate the heat. That is, first, the refrigerant flows in the following order: (41) the suction port of the first step compression portion 1A; (42) the discharge port of the first stage compression portion 1A; (43) the suction port of the second stage compression portion 1B; and (44) the discharge port of the second stage compression portion 1B. Continuously, the refrigerant flows in the following order: (45) the exit of the radiator 2 and also the entrance of the first heat exchanger 65; (49) the exit of the first heat exchanger 65; (60) the entrance of the expansion valve 31; and (46) the exit of the first expansion valve 31. In this situation, the refrigerant is in the two-phase mixture of gas/liquid.

In this situation, the proportion of gas to liquid is equivalent of the proportion of the length of a line segment L1 (gas) to the length of a line segment L2 (liquid). The refrigerant enters the gas-liquid separator 33 in the state of the two-phase mixture of gas/liquid. The gas refrigerant, which has been separated in this point, is delivered to the middle pressure portion of the compressor 1 through the refrigerant pipe 6D, that is, led to a portion between the middle cooler 1C and the second stage compression portion 1B. The reference numeral (53) designates the exit of the gas/liquid separator 33 (gas refrigerant), and the refrigerant which has passed this point reaches (43) the suction port of the second step compression portion 1B, and then the refrigerant is compressed in the second stage compression portion 1B.

On the other hand, the liquid refrigerant, which has been separated by the gas-liquid separator 33, flows through the refrigerant pipe 6C, and reaches the second expansion valve 32. Character (47) designates the entrance of the second expansion valve 32, character (48) is the exit of the second expansion valve 32, and character (62) is the exit of the heat absorber 14. After the liquid refrigerant flown into the heat absorber 14 evaporates and absorbs the heat of the air inside the air path 44, the liquid refrigerant conducts heat exchange with the refrigerant coming from the radiator 2 in the first heat exchanger 65, and returns to the suction portion of the first stage compression portion 1A. Character (63) is the exit of the first heat exchanger 65.

As described above, during the refrigerating operation, the refrigerating cycle is performed in almost the same way as the aforementioned freezing operation, except that evaporation temperature, middle pressure, and the like, increase. Here, the arrangement is such that during the refrigerating operation, since the first switching damper 45 is placed in the position for closing the entrance A of the air path 44 (the dotted line) and the second switching damper 49 is placed in the position for closing the exit B of the air path 44 (the dotted line), the inside air flows through the back air path 46, so the air in the refrigerating compartment 41 is circulated by the fan 48 through the air path 44 and the back air path 46, and the circulated air is cooled by the heat absorber 14, resulting in cooling the refrigerating compartment 41.

The refrigerant is circulated and the state changes, so the refrigerating cycle is formed, during both the freezing operation and the refrigerating operation, as described above, whereby the respective compartments 41 and 42 are cooled to maintain a predetermined temperature, respectively.

Since carbon dioxide is used as a refrigerant for the refrigerating cycle device 20 of the present embodiment, even if atmospheric temperature (outside air temperature) around the radiator 2, that is, the temperature of the exit of the radiator 2 of (5) in Fig. 2 is, for example, 26°C , as shown in the figure, it is difficult to obtain sufficient cooling ability in the heat absorber 14 because the dryness of the refrigerant flowing into the second expansion valve 32 is too high and the proportion of the gas refrigerant in the refrigerant is high, compared to the case in which the conventional CFC-type refrigerant or HCtype refrigerant is used.

Therefore, in the refrigerator 30 of the present embodiment, the arrangement is such that the refrigerant from the radiator 2 can be cooled in the first heat exchanger 65, and furthermore, the refrigerant from the radiator 2 can be further cooled by embedding all or a portion of the refrigerant pipe 6A, preferably 60% or more of the length of the refrigerant pipe 6A, in the heat insulating material 47. Thereby, in the refrigerator 30, the supercooling degree of the refrigerator after discharged from the radiator 2 and before entering the heat absorber 14 can be increased, and a drastic improvement of the cooling ability can be expected. Incidentally, since the inside of the heat insulating material 47 has an intermediate temperature between the ambient temperature and the inside temperature of the refrigerator, the refrigerant from the radiator 2 can be cooled by the heat insulating material 47.

As described above, the portion from (5) to (9) in the cycle line shown with the solid line is the cooling by the first heat exchanger 65, and the portion from (9) to (10) in the same cycle line is the cooling by the heat insulating material 47. Thereby, in the refrigerator 30 of the present embodiment, it is possible to obtain sufficient cooling ability even if carbon dioxide is used as the refrigerant.

Here, the case in which the refrigerant pipe 6A is not embedded in the heat insulating material 47 is explained as a comparative example. In this case, the cycle line shown with the dotted line in Fig. 2 is formed during the freezing operation. Characters (1), (2), and the like in the cycle line shown with the dotted line show the same states as those shown by the same characters in the cycle line with the aforementioned solid line, in the refrigerating cycle,

In Fig. 2, in the comparison of the cycle line (solid line) of the present embodiment with the cycle line (dotted line) of the comparative example, in the cycle line with the solid line, the cooling effect of the heat insulating material 47 is shown, in the portion from (9) to (10), whereas in the cycle line with the dotted line, no cooling effect by the heat insulating material 47 is shown, and therefore, there is a difference in which the reference numeral (9) becomes the exit of the first heat exchanger 65 and the entrance of the first expansion valve 31.

Thereby, in the cycle line (solid line) of the present embodiment, the cooling ability in the heat absorber 14 is enhanced , and also the high pressure of the refrigerating cycle is decreased and thus the compression work of the compressor 1 decreases.

Incidentally, when carbon dioxide is used as a refrigerant, as in the refrigerator 30 of the present embodiment, the cooling effect of the aforementioned heat insulating material 47 is more remarkable, compared to the case in which a conventional refrigerant is used. This is because, when carbon dioxide is used as a refrigerant, since the refrigerating cycle is often operated near the supercritical pressure, the effect of decreasing the high pressure of the refrigerating cycle is larger than the effect obtained in a conventional refrigerant.

Furthermore, even though the cooling effect of the heat insulating material 47 can be obtained not only during the freezing operation as described above but also during the refrigerating operation, but the cooling effect during the refrigerating operation is almost the same as that during the freezing operation, and the explanation thereof is omitted.

Furthermore, in the present embodiment, as described above, since the refrigerant pipe 6A is allocated outside the side edge of the vacuum heat insulating material 61, it is possible to cool the refrigerant pipe 6A by effectively using the leakage of cold energy escaping from respective compartments 41 and 42 in the direction of dotted line arrows shown in Fig. 1C.

Furthermore, in the present embodiment, since the gas-liquid separator 33 is provided to deliver the gas refrigerant separated by the gas-liquid separator 33 to the middle pressure portion of the compressor 1, that is, a portion between the middle cooler 1C and the second stage compression portion 1B, the efficiency of the refrigerating cycle can be improved. In particular, since the refrigerator 30 uses carbon dioxide as the refrigerant, with regard to the proportion of the gas to the liquid separated by the gas-liquid separator 33, the proportion of the gas (line segment L1) increases compared to the conventional CFC-type refrigerant, so that the increased gas is delivered to the middle pressure portion of the compressor 1 and thereby the efficiency can be improved.

Incidentally, as described above, the gas-liquid separator 33 is provided in the present embodiment, and the gas-liquid separator 33 has almost the same temperature as the refrigerating compartment 42. Therefore, usually, it is necessary to perform a heat insulating process to avoid dew condensation and a temperature rise. However, in the present embodiment, since the gas-liquid separator 33 is embedded in the heat insulating material 47, a special heat insulating process is not needed.

Furthermore, since the gas-liquid separator 33 has larger heat release compared to the refrigerant pipes, and the like, even if the gas-liquid separator 33 is embedded in the heat insulating material, heat leakage occurs to the freezing compartment 42 operated at a low temperature, depending on which portion in the heat insulating material 47 the gas-liquid separator 33 is embedded, and may result in a temperature rise of the freezing compartment 42. However, since the gas-liquid separator 33 of the present embodiment is allocated in the heat insulating material 47 in the back of the refrigerating compartment 41, which is operated with a higher temperature than the freezing compartment 42, the heat leakage can be suppressed.

### <Second embodiment>

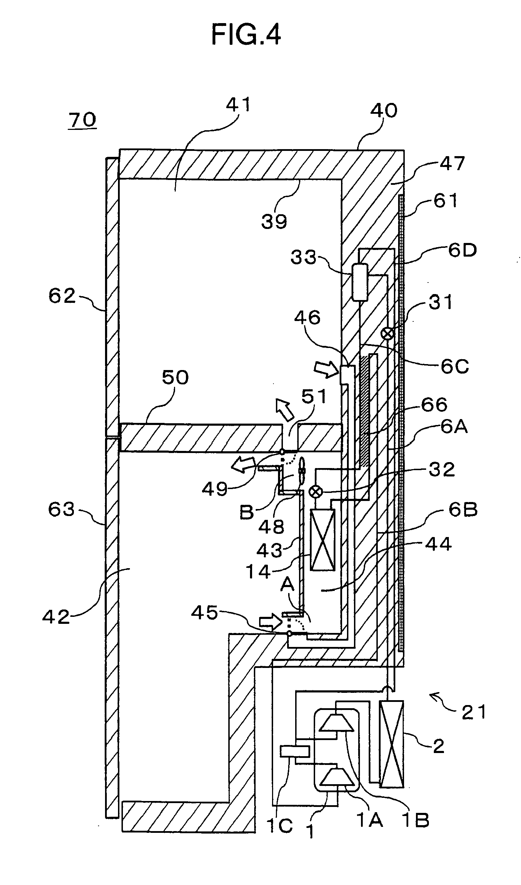

Next, a second embodiment of the present invention is explained with reference to Fig. 4. Figure 4 is a side sectional view of a refrigerator 70 of the second embodiment. Incidentally, in Fig. 4, elements which have the same reference numerals as those of the elements in the refrigerator 30 of the first embodiment described above have the same or similar functions and effects as in the first embodiment. When compared to the refrigerator 30 of the first embodiment described above, the refrigerator 70 has a difference in the point in which the refrigerator 70 has a refrigerating cycle device 21 which includes a second heat exchanger 66 instead of the first heat exchanger 65.

The second heat exchanger 66 is able to conduct heat exchange between the liquid refrigerant separated by the gas-liquid separator 33 and the refrigerant discharged from the heat absorber 14. That is, the second heat exchanger 66 is formed between the refrigerant pipe 6C and the refrigerant pipe 6B. By using the second heat exchanger 66, the liquid refrigerant before entering the second expansion valve 32 and the heat absorber 14 can be effectively supercooled, and thus the cooling ability by the heat absorber 14 can be improved as well as the efficiency of the refrigerating cycle can be also improved.

### <Third embodiment>

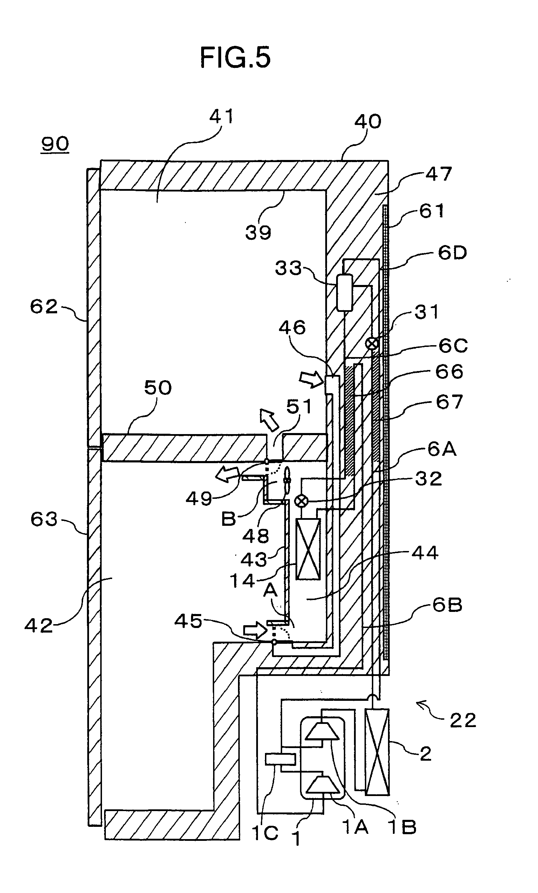

Next, a third embodiment of the present invention is explained with reference to Fig. 5. Figure 5 is a side sectional view of a refrigerator 90 of the third embodiment. Incidentally, in Fig. 5, elements which have the same reference numerals as those in each embodiment described above have the same or similar functions and effects as in the first embodiment. When compared to the refrigerator 70 of the second embodiment described above, the refrigerator 90 has a difference in the point in which the refrigerator 90 has a refrigerating cycle device 22 which includes a third heat exchanger 67 in addition to the second heat exchanger 66.

The third heat exchanger 67 is able to conduct heat exchange between the refrigerant discharged from the radiator 2 and the gas refrigerant separated by the gas-liquid separator 33. That is, the third heat exchanger 67 is formed between the refrigerant pipe 6A and the refrigerant pipe 6D. By using the third heat exchanger 67, in addition to the supercooling effect of the second heat exchanger 66 of the second embodiment described above, it is possible to cool the refrigerant discharged from the radiator 2 before entering the gas-liquid separator 33 by the gas refrigerant separated by the gas-liquid separator 33, and thus further improvement of the efficiency of the freezing cycle in the refrigerator 90 can be achieved.

### <Fourth embodiment>

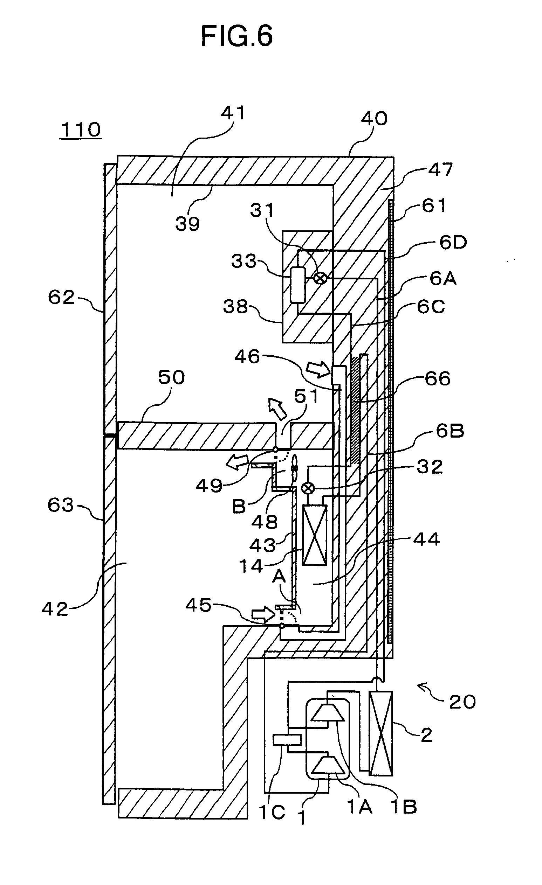

Next, a fourth embodiment of the present invention is explained with reference to Fig. 6. Figure 6 is a side sectional view of a refrigerator 110 of the forth embodiment. Incidentally, in Fig. 6, elements which have the same reference numerals as those in each embodiment described above have the same or similar functions and effects as in the first embodiment. Compared to the refrigerator 30 of the first embodiment described above, the refrigerator 110 has a difference in a point in which the refrigerator 110 has a storage box 38.

The storage box 38 is provided in the back portion of the refrigerating compartment 41, and is a box-type storage portion detachably attached to the inner case 39, and as shown in Fig. 6, the gas-liquid separator 33 and the first expansion valve 31 are housed in the storage box 38. Incidentally, the inside of the storage box 38 is filled with heat insulating material 47.

As described above, since the refrigerator 110 has a structure in which the gas-liquid separator 33 with a number of welded portions is housed inside the storage box 38 detachable from the inner case 39, even if leakage of the refrigerant occurs from the welded portions of the gas-liquid separator 33, unlike the refrigerators of the aforementioned embodiments, it is not necessary to dismount the outer case 40 and the inner case 39 for conducting maintenance, but only necessary to dismount the storage box 38, and therefore maintainability of the refrigerator 110 improves.

Embodiments of the present invention are described above, however, the present invention is not limited to the above embodiments, but can be variously modified.

In the embodiments of the present invention, the first expansion valve 31 and the second expansion valve 32 are used as decompression means, however, the decompression means is not limited to this, and a capillary tube, or the like, can also be used. Furthermore, the gas-liquid separator 33 is used as a gas-liquid separation means, however, the gas-liquid separation means is not limited to this, and any means which is able to separate gas and liquid is acceptable. For example, a T-shaped refrigerant pipe which is inclined by 90 degrees can be used.

Furthermore, the refrigerator of the present invention may have all of the aforementioned heat exchangers, or one or two of the aforementioned heat exchangers, that is, the first heat exchanger 65, the second heat exchanger 66, and the third heat exchanger 67.

Materials for the heat insulating material 47 and the vacuum heat insulating material 61 are not limited to those explained in the aforementioned embodiments, so far as the present invention can be appropriately constructed.

## Claims

1. A refrigerator, comprising;
a refrigerating cycle device including
a compressor having a middle pressure portion,
a radiator connected to a discharge side of the compressor,
first decompression means connected to an exit side of the radiator,
gas-liquid separation means for separating a refrigerant, which is in a mixed gas-liquid state by being decompressed by the first decompression means, into a gas refrigerant and a liquid refrigerant,
second decompression means into which the liquid refrigerant discharged from the gas-liquid separation means flows,
a heat absorber into which the refrigerant discharged from the second decompression means flows, and
a refrigerant pipe for delivering the gas refrigerant discharged from the gas-liquid separation means to the middle pressure portion;
an outer case;
an inner case; and
a heat insulating material for filling a gap between the outer case and the inner case;
wherein the gas-liquid separation means is arranged in the heat insulating material.

2. A refrigerator, comprising;
a refrigerating cycle device, including
a compressor having a middle pressure portion,
a radiator connected to a discharge side of the compressor,
first decompression means connected to an exit side of the radiator,
gas-liquid separation means for separating a refrigerant, which is in a mixed gas-liquid state by being decompressed by the first decompression means, into a gas refrigerant and a liquid refrigerant,
second decompression means into which the liquid refrigerant discharged from the gas-liquid separation means flows,
a heat absorber into which the refrigerant discharged from the second decompression means flows, and
a refrigerant pipe for delivering the gas refrigerant discharged from the gas-liquid separation means to the middle pressure portion;
an outer case;
an inner case; and
a storage box filled with a heat insulating material;
wherein the gas-liquid separation means is housed in the storage box.

3. The refrigerator according to claim 1 or 2, further comprising a refrigerating compartment, and a freezing compartment in which the temperature is maintained lower than the temperature of the refrigerating compartment, and wherein the gas-liquid separation means is placed closer to the refrigerating compartment than to the freezing compartment.

4. The refrigerator according to any one of claims 1 to 3, further comprising a heat exchanger arranged to be capable of conducting heat exchange between the refrigerant which is between the discharge side of the compressor and the first decompression means, and the refrigerant which is between an exit side of the heat absorber and a suction port of the compressor.

5. The refrigerator according to any one of claims 1 to 4, further comprising:
a first heat exchanger arranged to be capable of conducting heat exchange between the liquid refrigerant which is separated by the gas-liquid separation means before entering the second decompression means, and the refrigerant which is between the exit side of the heat absorber and the suction port of the compressor, and/or
a second heat exchanger which is capable of conducting heat exchange between the refrigerant which is between the discharge side of the compressor and the first decompression means, and the gas refrigerant which is separated by the gas-liquid separation means before being delivered into the middle pressure portion of the compressor.

6. A refrigerator, comprising:
a refrigerating cycle device including
a compressor,
a radiator connected to a discharge side of the compressor,
decompression means connected to an exit side of the radiator, and
a heat absorber into which the liquid refrigerant discharged from the decompression means flows, and which is filled with a carbon dioxide refrigerant;
an outer case;
an inner case; and
a heat insulating material for filling a gap between the outer case and the inner case;
wherein a high pressure refrigerant pipe extending from the radiator is embedded in the heat insulating material.

7. The refrigerator according to claim 6, wherein: a second heat insulating material which has lower thermal conductivity than the heat insulating material is provided in the heat insulating material arranged in a back of the refrigerator; and
the high pressure refrigerant pipe is placed outside a side edge of the second heat insulating material.
